# DEMANDE DE BREVET EUROPEEN

(11) **EP 2 312 296 A1**
(43) Date de publication de la demande: **20.04.2011**
(21) Numéro de dépôt: 09173124.0
(22) Date de dépôt: 15.10.2009
(51) Int. Cl.: G01N 15/14

(54) **Dispositif de diagnostic optique d'un flux de particules à haute vitesse**

(71) Demandeur: Ecole Nationale d'Ingénieurs de Saint Etienne, 42000 Saint Etienne (FR)
(72) Inventeur: Chivel, Yuri Alexandrovich, 220037, MINSK (BY); Smurov, Igor, 42210, BOISSET LES MONTROND (FR); Laget, Bernard, 42800, CHATEAUNEUF (FR); Doubenskaia, Maria, 42210, BOISSET-LES-MONTROND (FR)
(74) Mandataire: Delorme, Nicolas

(57) **Abrégé**

Ce dispositif de diagnostic optique d'un flux de particules (4) à haute vitesse présente un axe optique X'-X et comporte :
- une source de photons (1) ;
- un premier miroir (2) présentant un axe sensiblement confondu avec l'axe optique X'-X, ledit premier miroir étant conçu pour que les photons émis par la source de photons se réfléchissent sur ce miroir de manière à former un faisceau de photons convergeant vers une zone de focalisation (8) située dans le flux de particules ;
- un second miroir (5) présentant un axe sensiblement confondu avec l'axe optique X'-X, ledit second miroir étant conçu pour réfléchir vers la zone de focalisation une première partie du faisceau de photons, diffusée à travers le flux de particules ;
- au moins un récepteur de photons (6) disposé de manière à recevoir des photons diffusés depuis la zone de focalisation.

## Description

La présente invention se rapporte à un dispositif de diagnostic optique d'un flux de particules à haute vitesse.

D'une part, on entend par « diagnostic optique » un contrôle optique des caractéristiques physiques de particules telles que leur dimension, leur vitesse ou bien encore leur température.

D'autre part, on entend par « haute vitesse » des vitesses de l'ordre de plusieurs centaines de mètres par seconde.

De tels dispositifs sont particulièrement utiles pour contrôler des procédés de traitement de surface impliquant une projection thermique de particules, par exemple la projection plasma, la projection thermique à flamme, la projection supersonique, la projection à froid, la projection par détonation etc.

Lorsque les particules sont fortement chauffées (de l'ordre de quelques milliers de kelvins) comme pour la projection plasma, il est connu de l'état de la technique d'utiliser une caméra de type CCD et d'analyser la brillance de l'image dépendant de la dimension, de la vitesse et de la température des particules.

En revanche, lorsque les particules sont faiblement chauffées, comme pour la projection supersonique et la projection à froid, la sensibilité de la caméra CCD est insuffisante pour effectuer une analyse pertinente de la brillance de l'image.

Il est alors notamment connu de l'état de la technique d'utiliser la méthode PSI (*Particle Shape Imaging* en langue anglaise) consistant à irradier les particules avec un faisceau laser à forte puissance suivant deux directions différentes et analyser la brillance des deux images obtenues avec une caméra CCD.

Malgré l'efficience de cette méthode, celle-ci s'avère coûteuse par la présence du laser à forte puissance.

De plus, de par la nature d'un laser, le faisceau laser ne peut irradier uniformément une surface importante telle qu'une surface de l'ordre de plusieurs centimètres carrés.

Par ailleurs, le traitement d'images obtenues avec la caméra CCD est plus lourd car le nombre d'images à analyser est doublé, et plus complexe de par la nécessité de synchroniser le laser et la caméra CCD, et de la complexité de l'identification des traces de particules.

La présente invention a pour objet de remédier en tout ou partie aux inconvénients précités et consiste à cet effet en un dispositif de diagnostic optique d'un flux de particules à haute vitesse, présentant un axe optique et comportant :
- une source de photons ;
- un premier miroir présentant un axe sensiblement confondu avec l'axe optique, ledit premier miroir étant conçu pour que les photons émis par la source de photons se réfléchissent sur ce miroir de manière à former un faisceau de photons convergeant vers une zone de focalisation située dans le flux de particules ;
- un second miroir présentant un axe sensiblement confondu avec l'axe optique, ledit second miroir étant conçu pour réfléchir vers la zone de focalisation une première partie du faisceau de photons, diffusée à travers le flux de particules ;
- au moins un récepteur de photons disposé de manière à recevoir des photons diffusés depuis la zone de focalisation.

Ainsi, le premier miroir en conjugaison avec la source de photons permet d'irradier uniformément une zone de focalisation dans le flux de particules, ladite zone de focalisation pouvant atteindre une surface de l'ordre de plusieurs centimètres carrés.

Quant au second miroir, celui-ci permet d'augmenter l'irradiation du flux de particules dans la zone de focalisation, et par là-même de réduire la puissance de la source de photons et/ou réduire la sensibilité du récepteur de photons nécessaires au diagnostic optique du flux de particules.

Dans un mode de réalisation préféré, le dispositif selon l'invention comporte en outre une cavité optique centrée sur l'axe optique et entourant le second miroir, ladite cavité étant conçue pour piéger une seconde partie du faisceau de photons, diffusée à travers le flux de particules et passant entre le second miroir et la cavité.

Ainsi, la cavité optique permet de réduire la pollution lumineuse provenant de la seconde partie du faisceau de photons et donc d'améliorer le contraste pour le récepteur de photons.

Dans un mode de réalisation de l'invention, le premier miroir est elliptique.

Avantageusement, la source de photons est disposée à proximité d'un foyer géométrique du premier miroir.

Un miroir elliptique possède comme l'ellipse deux foyers géométriques, et présente comme propriété avantageuse de réfléchir les rayons issus d'un foyer vers l'autre foyer. On peut ainsi réaliser aisément un faisceau lumineux convergent en disposant une source lumineuse à proximité de l'un des foyers.

Selon un autre mode de réalisation, le centre du second miroir est localisé dans la zone de focalisation.

Ainsi, le second miroir est rendu stigmatique de manière à réfléchir vers la zone de focalisation la première partie du faisceau de photons, diffusée à travers le flux de particules.

De manière avantageuse, le second miroir est sphérique.

Un miroir sphérique permet d'augmenter le champ angulaire pour la réflexion du faisceau de photons par rapport à un miroir plan.

Selon une variante d'exécution, la source de photons est une lampe à arc.

Une lampe à arc permet d'obtenir des puissances de l'ordre du kilowatt, et s'avère nettement moins coûteuse qu'un laser à forte puissance.

Selon une caractéristique avantageuse, le dispositif selon l'invention comporte en outre une tête de focalisation centrée sur l'axe optique et reliée au premier miroir.

La tête de focalisation permet d'augmenter jusqu'à 20% l'irradiation du flux de particules dans la zone de focalisation.

Selon une autre caractéristique avantageuse, le dispositif selon l'invention comporte en outre un objectif de projection conçu pour projeter une image réelle des photons diffusés depuis la zone de focalisation sur le récepteur de photons.

Préférentiellement, le récepteur de photons est disposé selon une direction sensiblement perpendiculaire à une direction de propagation du flux de particules.

Ainsi, il est possible de s'affranchir de corrections trigonométriques pour le calcul de la trajectoire des particules.

De manière préférentielle, le récepteur de photons comprend au moins un capteur de type CCD.

Un capteur CCD présente un faible niveau de bruit et une surface de capture de photons élevée vis-à-vis d'un capteur de type CMOS par exemple.

Encore préférentiellement, le récepteur de photons comprend un obturateur.

L'obturateur permet de modifier le temps d'exposition aux photons du récepteur.

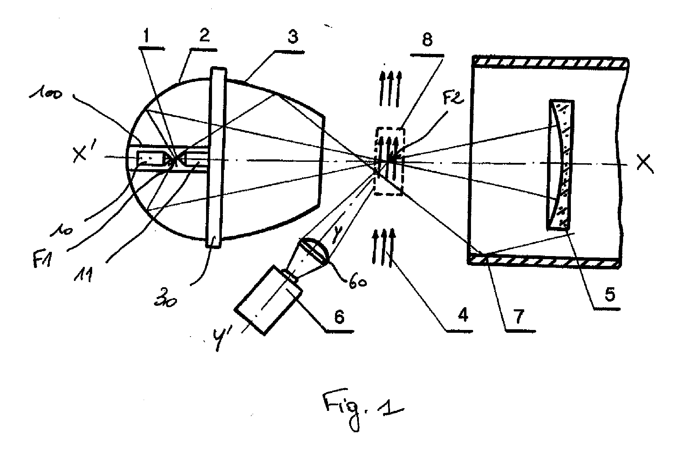

D'autres caractéristiques et avantages de la présente invention apparaîtront à la lecture de la description détaillée ci-après d'un mode de réalisation non limitatif, en faisant référence aux dessins annexés sur lesquels la figure 1 est une vue schématique d'un dispositif selon l'invention.

Le dispositif illustré à la figure 1 est disposé autour d'un flux de particules 4 dont la direction et le sens de propagation sont schématisés par trois flèches.

Le dispositif présente un axe optique X'-X formant un axe de révolution du dispositif. L'axe optique X'-X est dirigé suivant une direction sensiblement perpendiculaire à la direction de propagation du flux de particules 4.

D'une part, ce dispositif comporte une lampe à arc 1 formant une source de photons, et présentant deux bornes 10, 11 métalliques respectivement positive et négative. La lampe à arc 1 est ménagée à l'intérieur d'une enceinte 100 en quartz. Sa température de couleur est comprise entre 5000 et 6000 K.

En outre, le dispositif comporte un miroir elliptique 2 concave présentant un axe sensiblement confondu avec l'axe optique X'-X. Le miroir elliptique 2 entoure partiellement la lampe à arc 1.

Par ailleurs, une tête de focalisation 3 centrée sur l'axe optique X'-X est rattachée au miroir elliptique 2 par une pièce de raccordement 30.

La lampe à arc 1, le miroir elliptique 2 et la tête de focalisation 3 sont disposés à l'arrière du flux de particules 4 relativement à l'orientation de l'axe optique X'-X.

D'autre part, le dispositif comporte une cavité 7 optique entourant un miroir sphérique 5. La cavité 7 est centrée sur l'axe optique X'-X, et le miroir sphérique 5 présente un axe sensiblement confondu avec l'axe optique X'-X.

La cavité 7 et le miroir sphérique 5 sont disposés à l'avant du flux de particules 4 relativement à l'orientation de l'axe optique X'-X.

Le dispositif est également muni d'une caméra 6 CCD équipée d'un objectif 60 de projection. La caméra 6 est également pourvue de capteurs CCD et d'un obturateur, non représentés à la figure 1.

La caméra 6 et l'objectif 60 sont disposés suivant une direction Y'-Y oblique relativement à l'axe optique X'-X. Il est à noter que préférentiellement la caméra 6 est disposée selon une direction sensiblement perpendiculaire à la direction de propagation du flux de particules 4, non représentée à la figure 1 pour des raisons de clarté.

Concernant le fonctionnement du dispositif, l'intervalle entre les bornes 10, 11 de la lampe à arc 1 est disposé à proximité d'un premier foyer géométrique F1 du miroir elliptique 2 de sorte que les photons émis par la lampe à arc 1 se réfléchissent sur le miroir elliptique 2 pour former un faisceau de photons convergeant vers une zone de focalisation 8 située au voisinage du second foyer géométrique F2. La zone de focalisation 8 présente typiquement un diamètre de l'ordre de 15 mm. De plus, le miroir elliptique 2 est disposé de manière à ce que le second foyer géométrique F2 soit situé dans le flux de particules 4.

Une première partie du faisceau de photons convergeant vers la zone de focalisation 8 diffuse à travers le flux de particules 4 et vient frapper le miroir sphérique 5. Le miroir sphérique 5 est disposé de manière à ce que son centre soit sensiblement confondu avec le second foyer géométrique F2. Il en résulte que la première partie du faisceau est réfléchie vers la zone de focalisation 8.

Une seconde partie du faisceau de photons, diffusée à travers le flux de particules 4 et passant entre le miroir sphérique 5 et la cavité 7 est piégée par cette dernière.

Une partie des photons diffusés depuis la zone de focalisation 8 sont ensuite collectés par l'objectif 60 et projetés sur les capteurs CCD équipant la caméra 6. Le temps d'exposition défini par la durée d'ouverture de l'obturateur peut varier entre 1 et 10 µs. Ce temps d'exposition est déterminé par la vitesse du flux de particules 4 ainsi que par le champ de vision de l'objectif 60. En effet, la trace d'une particule doit apparaître sur toute sa longueur dans le champ de vision de l'objectif 60.

Enfin, les capteurs CCD envoient un signal électrique analogique qui est converti puis traité afin d'obtenir une image numérique des photons reçus par les capteurs CCD. L'image numérique est ensuite analysée afin d'étudier notamment certaines caractéristiques physiques des particules telles que leur dimension, leur vitesse ou bien encore leur température.

Bien entendu, le mode de réalisation de l'invention décrit ci-dessus ne présente aucun caractère limitatif. Des détails et améliorations peuvent y être apportés dans d'autres variantes d'exécution sans pour autant sortir du cadre de l'invention.

## Revendications

1. Dispositif de diagnostic optique d'un flux de particules (4) à haute vitesse, présentant un axe optique X'-X et comportant :
- une source de photons (1) ;
- un premier miroir (2) présentant un axe sensiblement confondu avec l'axe optique X'-X, ledit premier miroir étant conçu pour que les photons émis par la source de photons se réfléchissent sur ce miroir de manière à former un faisceau de photons convergeant vers une zone de focalisation (8) située dans le flux de particules ;
- un second miroir (5) présentant un axe sensiblement confondu avec l'axe optique X'-X, ledit second miroir étant conçu pour réfléchir vers la zone de focalisation une première partie du faisceau de photons, diffusée à travers le flux de particules ;
- au moins un récepteur de photons (6) disposé de manière à recevoir des photons diffusés depuis la zone de focalisation.

2. Dispositif selon la revendication 1, comportant en outre une cavité (7) optique centrée sur l'axe optique X'-X et entourant le second miroir (5), ladite cavité étant conçue pour piéger une seconde partie du faisceau de photons, diffusée à travers le flux de particules (4) et passant entre le second miroir et la cavité.

3. Dispositif selon la revendication 1 ou 2, dans lequel le premier miroir (2) est elliptique.

4. Dispositif selon la revendication 3, dans lequel la source de photons (1) est disposée à proximité d'un foyer géométrique (F1) du premier miroir (2).

5. Dispositif selon l'une des revendications 1 à 4, dans lequel le centre du second miroir (5) est localisé dans la zone de focalisation (8).

6. Dispositif selon l'une des revendications 1 à 5, dans lequel le second miroir (5) est sphérique.

7. Dispositif selon l'une des revendications 1 à 6, dans lequel la source de photons est une lampe à arc (1).

8. Dispositif selon l'une des revendications 1 à 7, comportant en outre une tête de focalisation (3) centrée sur l'axe optique X'-X et reliée au premier miroir (2).

9. Dispositif selon l'une des revendications 1 à 8, comportant en outre un objectif (60) de projection conçu pour projeter une image réelle des photons diffusés depuis la zone de focalisation (8) sur le récepteur de photons (6).

10. Dispositif selon l'une des revendications 1 à 9, dans lequel le récepteur de photons (6) est disposé selon une direction sensiblement perpendiculaire à une direction de propagation du flux de particules (4).

11. Dispositif selon l'une des revendications 1 à 10, dans lequel le récepteur de photons (6) comprend au moins un capteur de type CCD.

12. Dispositif selon l'une des revendications 1 à 11, dans lequel le récepteur de photons (6) comprend un obturateur.
